Europäisches Patentamt

European Patent Office

Office européen des brevets

(11) Publication number: 0 673 033 A2

# EUROPEAN PATENT APPLICATION

(21) Application number: 95103858.7

(51) Int. Cl.6: G11B 21/08, G11B 5/55

(22) Date of filing: 16.03.95

(30) Priority: 16.03.94 JP 45967/94

(43) Date of publication of application:
20.09.95 Bulletin 95/38

(84) Designated Contracting States:
DE FR GB

(71) Applicant: HITACHI, LTD.
6, Kanda Surugadai 4-chome
Chiyoda-ku,
Tokyo 101 (JP)

(72) Inventor: Tsuneta, Katsuhiro
396, Iizumi
Odawara-shi,
Kanagawa-ken 250 (JP)

(74) Representative: Patentanwälte Beetz - Timpe -
Siegfried Schmitt-Fumian - Mayr
Steinsdorfstrasse 10
D-80538 München (DE)

(54) Magnetic disk drive.

(57) In a magnetic disk drive which has a plurality of heads (1) (#0 to #N) which are connected to each other corresponding to a plurality of stacked disk media (2) (#0 to #N) respectively and changes the head on a certain cylinder in the order of 0, 1, -----, and N, moves the head to the next cylinder position, and also changes the head in the order of 0, 1, -----, and N, at the point of time T0 before the point of time T1 that the reading or writing of data for one track (Sectors #0 to #99) by Head #0 on a certain cylinder ends, a head select command for the next head (Head #1) is issued to the selection controller (10) from the data controller (7), and then the head is changed to Head #1 at T2, and the offset between the heads is compensated, and the head starts reading or writing data from Sector #0 (shifted from Disk #0). The period of T0 to T1 is set to the time required for the selection controller to analyze the select command or more.

FIG. 1

EP 0 673 033 A2

Rank Xerox (UK) Business Services
(3.10/3.09/3.3.4)

## BACKGROUND OF THE INVENTION

The present invention relates to a head selection controller of a recording/reproducing apparatus for selecting a plurality of heads for recording and reproducing data on a plurality of disk media in correspondence with the target disk medium and executing the target positioning on the disk medium. Particularly, the present invention relates to a head selection controller for positioning a plurality of heads at the target positions quickly.

Generally in a recording/reproducing apparatus for loading a plurality of data disks including sector servo information, the heads for recording and reproducing data in correspondence with each surface of the disk media are integrated with each other. The aggregate consisting of the plurality of heads are structured so that the plurality of heads can move across tracks on the data disks at the same time. Each head is basically positioned at the same radial position of each disk medium. An aggregate of storage areas consisting of a plurality of tracks positioned by each head is called a cylinder.

When a data file which is comparatively large is to be recorded or reproduced, the heads are positioned on a certain target cylinder and changed in the order of #0, #1, #2, --- in correspondence with each disk surface on the cylinder. After the last head is changed to, the heads are moved onto the next cylinder and changed in the order of #0, #1, #2, --- on the cylinder in the same way as with the previous cylinder and the whole data in the data file is recorded or reproduced.

When the heads are changed sequentially on the same cylinder, the center position of each head for the center of track is shifted (offset) and it is necessary to compensate the center position of head whenever each head is changed.

Such a conventional recording/reproducing apparatus having a plurality of data disks including sector servo information and a head positioning controller for compensating the head position whenever any head is changed is indicated, for example, in Japanese Patent Application Laid-Open 5-6635. This positioning controller of the prior art finely adjusts the displacement amount (offset) generated between each heads as quickly as possible at the time of head changing operation so as to allow a high-speed head changing operation. In this prior art, reduction of the compensation operation time for offsets which are generated at the time of head changing is taken into account. However, the time required for the head selection controller to receive a head select command and the overhead time required for the head selection controller to analyze the command and operate the actuator are not taken into account.

Namely, in the aforementioned prior art, when a certain head is changed to the next head on a certain cylinder, a head select command is issued after the predetermined track recording or reproducing by the head before changing is all finished. Therefore, the aforementioned overhead time and the offset compensation operation time for positioning the head after changing at the center of track are necessary before the head after changing starts writing and reading after the head selection controller receives the head select command and there is a problem imposed that the changing time cannot be shortened any more.

When the head changing time becomes longer like this, there is another problem imposed that the track skew amount between the disks is increased. For example, when Head #0 is changed to Head #1 on a certain cylinder, so as to minimize the waiting time for disk rotation, it is necessary to shift the sector start position of the track of Disk #1 (the Sector #0 position) behind the sector end position of the track of Disk #0, that is, the sector start position by the number of sectors corresponding to the time required for changing the head (in other words, the sector start position is delayed). This shift amount is called a track skew amount and when the changing time is long, it is necessary to set a large track skew amount beforehand.

## SUMMARY OF THE INVENTION

An object of the present invention is to eliminate the difficulties of the prior art mentioned above and to provide a head positioning controller which can shorten the overhead time required for head changing and to provide a head positioning controller which can improve the data processing speed by minimizing the track skew amount.

To accomplish the above object, the head positioning controller of the magnetic disk drive of the present invention is structured as shown below.

The head positioning controller of the magnetic disk drive consists of a plurality of disk recording media, a plurality of heads for recording or reproducing data on each disk recording medium, a data controller for inputting or outputting recorded or reproduced data, and a head selection controller for selecting the heads sequentially by a head select command from the data controller, recording or reproducing data sequentially on the corresponding disk recording media, and issuing a head select command for the head to be selected next to the head selection controller from the data controller before input or output by the data controller to a certain disk recording medium ends.

According to the present invention, when recording and reproducing are transferred from a certain disk recording medium to the next disk recording medium, a head select command (or head change command) for the head to be selected next is issued to the head selection controller from the data controller before the input-output processing (recording or reproducing) by the data controller for the previous disk recording medium ends. By doing this, the time required for decoding the content of the head select command (or head change command) which is received by the head selection controller and selecting the target head actually (a necessary time of head selection) is shifted into and partially overlapped with the recording or reproducing time by the head before changing. As a result, the whole changing time can be shortened by this shifted time and the recording or reproducing by the head after changing can be continued.

In this case, the issue timing for the select command is the point of time which is earlier than the point of time that the input-output processing (recording or reproducing) in the data controller by the head before changing (or for the disk recording medium before changing) ends by at least the time required for decoding the head select command by the head selection controller (namely, the aforementioned necessary time of head selection). By doing this, almost the whole of the necessary time of head selection is shifted into the recording and reproducing time by the head before changing, so that the changing time until the start of recording or reproducing by the next head can be shortened furthermore and the overhead time accompanying changing can be reduced.

When disk recording media for storing position information between data along concentric circular tracks and a plurality of heads which are connected to each other and move to each track at the same cylinder position of each disk recording medium are used, the present invention can be equipped with a head following controller for compensating the offset among the heads before and after changing which is caused in correspondence with head changing (or head selection). When one of the heads is selected by the head selector, this head following controller executes the feedback control so that the selected head follows the center of the target track on the basis of the reproduced position information. When the aforementioned offset is compensated by this control, the recording or reproducing is continued by the selected head immediately.

According to the present invention, when the head on a certain cylinder which is selected last (head having the last number of the cylinder) is recording or reproducing data, a head move command (seek command) to the next cylinder position is issued from the data controller to the seek controller before the input-output processing by the data controller using the head ends. By doing this, when the head is sought to the next cylinder position after recording and reproducing on all the tracks on a certain cylinder end, the time required for the seek controller to receive a seek command, decode it, and start the head seek operation actually is shifted into the recording and reproducing time by the head before changing and the time required for changing can be shortened.

The start point (position of Sector #0) of each track at the same cylinder position of the disk recording media is shifted backward sequentially in the rotational direction of the disk recording media in the order corresponding to the head changing order almost in correspondence with the necessary time of head changing (the time that the head actually operates). By doing this, the rotation waiting time at the time of head changing can be eliminated almost fully. In this case, only the necessary time of compensation for the offset may be taken into account as a time from the point of time that the recording or reproducing before the head is changed ends to the point of time that the recording or reproducing by the head after it is changed (the time for changing all the heads). As a result, the shifting amount (track skew amount) of track start point between the successive disk recording media can be reduced.

BRIEF DESCRIPTION OF THE DRAWINGS

Fig. 1 is a block diagram of the head positioning control system of a magnetic disk drive to which an embodiment of the present invention is applied.

Fig. 2 is a drawing showing a data reading operation accompanied by head changing in an embodiment of the present invention.

Fig. 3 is a drawing showing a conventional data reading operation accompanied by head changing.

Fig. 4 is a drawing showing a data reading operation accompanied by head changing in another embodiment of the present invention.

DESCRIPTION OF THE PREFERRED EMBODIMENTS

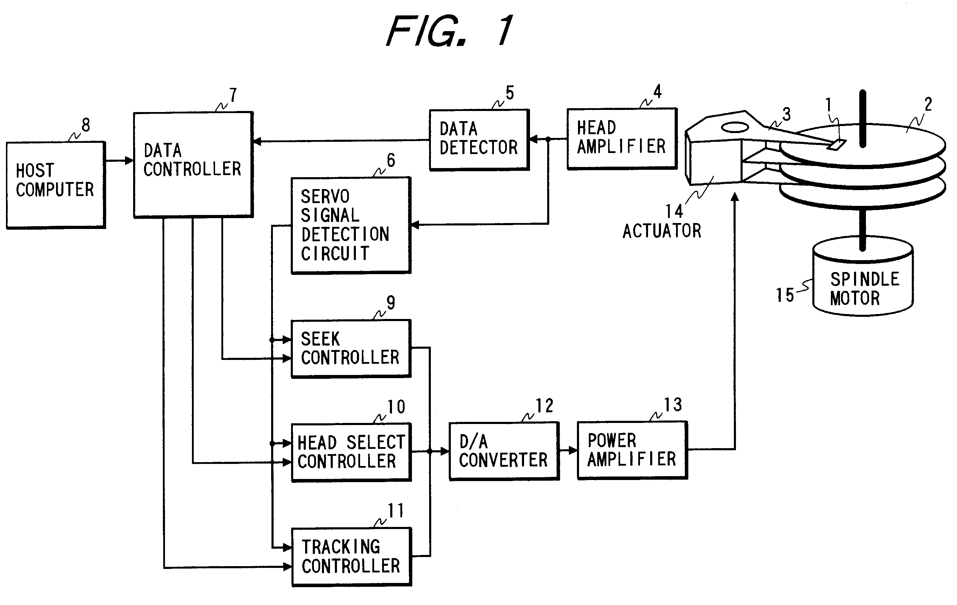

Embodiments of the present invention will now be described in detail by referring to the drawings. In Fig. 1, a numeral 1 indicates magnetic heads for recording or reproducing data. A numeral 2 indicates a plurality of magnetic disks for recording or reproducing data and they have concentric circular tracks respectively, are stacked on the same rotation axis, and are rotated together with each other by a spindle motor 15. The heads 1 are fixed to a carriage 3 respectively and connected to each other. Each head 1 corresponds to the surface of each disk 2 and can move to the target cylinder of each disk surface in link motion with each other. A numeral 4 indicates a head amplifier and amplifies a micro reproduced signal from each of the heads 1.

A numeral 5 indicates a data detector for demodulating digital data from a reproduced signal which is sent from the head amplifier 4. A numeral 6 indicates a servo signal detection circuit for detecting the head position from a reproduced signal which is sent from the head amplifier 4. A numeral 7 indicates a data controller and 8 a host computer. The data controller 7 controls writing and reading data on the basis of a command from the host computer 8. The host computer 8 is a high-order device of the magnetic disk drive and requests the magnetic disk drive to read and write data. A numeral 9 indicates a seek controller for controlling movement of each head, 10 a head selection controller for selecting a head by an instruction from the data controller 7, and 11 a head following controller for positioning each head at the center of the predetermined track. The seek controller 9, the head selection controller 10, and the head following controller 11 function together with each other in the microprocessor and a control signal is outputted to a D-A converter 12 from the seek controller 9, the head selection controller 10, and the head following controller 11. In this embodiment, the MPU which constitutes the data controller 7 is structured as different from the MPU which constitutes the seek controller 9, the head selection controller 10, and the head following controller 11. However, they may be integrated with each other. The output of the D-A converter 12 is inputted to a power amplifier 13 so as to supply a current to an actuator (or a voice coil motor (VCM)) 14 for driving the carriage 3. Furthermore, a numeral 15 indicates a spindle motor for rotating a plurality of magnetic disks together with each other.

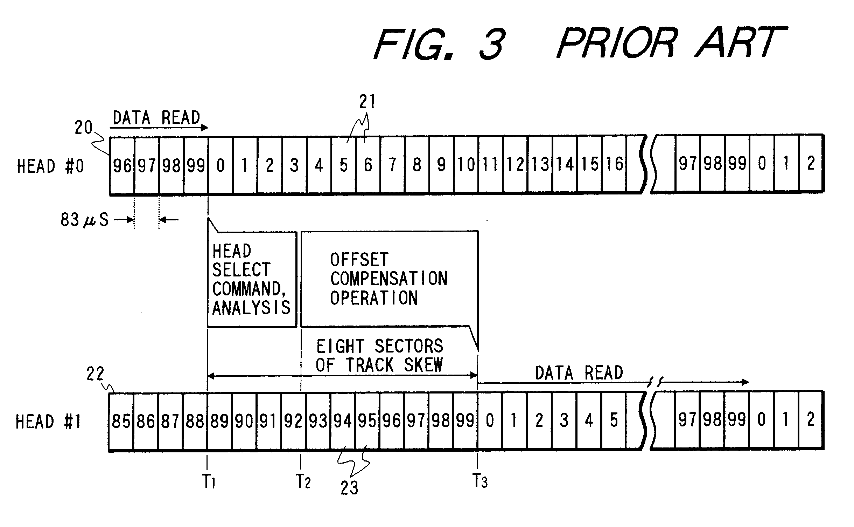

Next, for comparison, the data reading operation accompanied by head changing when head changing is executed by the prior art will be explained by referring to Fig. 3.

In Fig. 3, a numeral 20 indicates data recorded on the track of Head #0, which includes 100 sectors 21 from #0 to #99. A numeral 22 indicates data recorded on the track of Head #1, which includes 100 sectors 23 from #0 to #99 in the same way as with the data 20. The position of Section #0 of the data 22 is shifted from the position of Sector #0 to which Head #0 corresponds. This shift amount is the aforementioned track skew amount, which generally indicates the number of sectors. The track skew amount is decided so that reading from Sector #0 of Head #1 can be in time in consideration of the expected maximum offset operation time. The disk rotates at 7200 rpm and the time per each sector is 83.3 μs.

In a conventional magnetic disk drive, the data controller 7 analyzes a data read command from the host computer 8 and issues a corresponding command to the seek controller 9 and the head selection controller 10. In this case, a case that the drive starts reading from Sector #0 of Head #0 of Cylinder #N and reads data of 200 blocks (data for 200 sectors) is assumed and explained. The head selection controller 10 selects Head #0 and the actuator drives the carriage according to the output from the seek controller 9 at the same time and positions the head at Cylinder #N. When the positioning is completed, the drive starts the data reading operation continuously from the predetermined sector.

At the point of time T1 that the reading of the last sector (Sector #99) of Head #0 ends, the data controller 7 issues a head select command to the head selection controller 10 so as to select the next head (Head #1). The head selection controller 10 decodes the command, selects Head #1 at the point of time T2, and executes the offset operation (offset elimination operation) so as to position the center of Head #1 at the center of track of Disk #1. The offset operation, that is, the tracking controller reproduces servo information which is periodically recorded on the track and the head following controller 11 executes the feedback control so as to position the head at the center of track using this servo information. It takes about 300 μs from start (T1) of issue of the head select command to selection of the head (T2). Next, the movement amount for offset compensation is the distance equivalent to the shift amount between the center position of track of Head #0 and the center position of track of Head #1. When the offset compensation operation is completed at the point of time T3 and Head #1 is positioned at the center of track of Head #1, a head selection end signal is generated so as to inform the data processor that the subsequent reading processing can be executed. The time required for this offset compensation operation (from T2 to T3) is 600 μs at maximum and it means that a time of 900 μs is required from the point of time of command issue. It is assigned so that the sector number of Head #1 at this point of time is just set to Sector #0 at the beginning and an unnecessary rotation waiting time can be avoided. By doing this, the shift amount between the sector numbers of Head #0 and Head #1 becomes the track skew amount. In this example, as shown in the following formula, the necessary skew amount is 11 sectors.

$$(300 + 600) / 83.3 = 10.8 \text{--} > 11 \text{ sectors}$$

In this way, when data for Head #0 from Sector #0 to Sector #99 is read, and then data for Head #1 from Sector #0 to Sector #99 is read, and the reading of data of 200 blocks in total ends, a series of data processing ends.

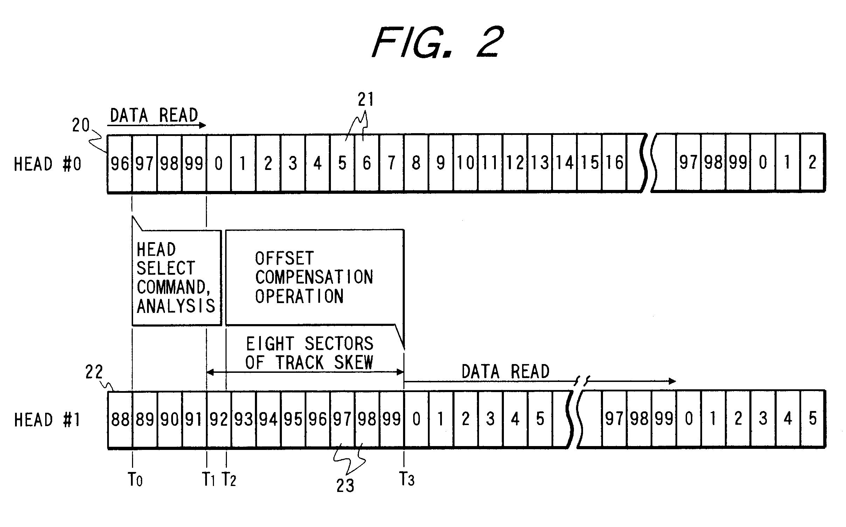

Next, an embodiment when the present invention is applied to the head positioning control system of the magnetic disk drive shown in Fig. 1 will be explained by referring to Fig. 2.

Fig. 2 is a drawing showing the operation which starts head changing during data read in this embodiment. In Fig. 2, the same numeral is assigned to each of the parts corresponding to Fig. 3 so as to omit duplicate explanation. Also in Fig. 2, the process up to start of reading by Head #0 is exactly the same as that shown in Fig. 3. However, in this embodiment, unlike the case shown in Fig. 3, at the point of time T0 that the processing at Sector #96 ends, which is 3 sectors before the point of time T1 that the reading processing at the last sector ends, the data controller 7 issues a head select command to the head selection controller 10 so as to select the next head (Head #1). The head selection controller 10 decodes the command and selects Head #1 at the point of time T2. It takes about 250 μs from start of issue of the command at the point of time T0 to execution of selection of the head at the point of time T2. When the processing at the last sector (Sector #99) of Head #0 ends, the head changing is executed immediately (at the point of time T2). The offset operation starts from here, and Section #0 can be accessed by Head #1 600 μs later, and data is read by Head #1 from this sector (#0). The head following controller 11 executes the tracking controller for following Head #1 on the center of the corresponding track using position information (servo information) which is periodically stored on the disk during the period that this offset operation is executed and during the period that data is read by Head #1 thereafter. Therefore, the skew amount from the last sector of Head #0 to Sector #0 of Head #1 is 8 sectors as shown in the following formula.

$$600 / 83.3 = 7.20 \longrightarrow 8 \text{ sectors}$$

As the comparison between Figs. 2 and 3 shows, in this embodiment, the time required for reading data per track is shortened from the conventional time for 111 sectors to the time for 108 sectors, that is, by about 3% (time for about 3 sectors). Namely, in this embodiment, there is no need to include the time required from issue of the head select command to actual changing of the head (form T0 to T2) in the head changing time. According to the present invention, there is no need to take the time for analyzing a command into account as a head changing time but it is sufficient to take only the time of offset compensation operation which is actually executed by the head (from T2 to T3) into account, so that the changing time can be shortened.

If a reading error occurs before the reading of the last sector by Head #0 ends when data is reproduced by Head #0, it is possible that data is reread by Head #0 continuously and when no reading error occurs as a result, the head is changed to Head #1.

In the aforementioned embodiment, when an attempt is made to issue a head select command at the time which is earlier than the point of time T1 that the data reading by the first (for example, #0) head ends by the time required for the head selection controller 10 to decode the command (the time for 3 sectors in this embodiment: 250 μs) or more, Head #1 can be changed simultaneously with the end of data reading by Head #0. However, when the head select command is issued sufficiently before the end of data reading by Head #0 at latest, the changing time can be shortened.

The actual offset between each heads is varied a little and the necessary offset compensation operation time is slightly varied according to it. It is desirable to preset the shift amount of the track start position between the disk recording media in consideration of the expected maximum offset compensation time.

In this embodiment, when recording and reproducing are transferred from a certain disk recording medium to the next disk recording medium, before input and output by the data controller to a certain disk recording medium end, a head select command for the head to be selected next is issued to the head selection controller from the data controller. By doing this, the time required for the head selection controller to decode the content of the head select command after it is received and to select the target head actually (the necessary time of head selection) is shifted into the recording and reproducing time by the head before changing. Therefore, it is possible to shorten the whole changing time by the shifted time and to continue the recording and reproducing by the head after changing. In this case, the timing for issuing the head select command is the point of time which is earlier than the time that the input and output at the data controller by the head before changing ends by at least the time required for the head selection controller to decode the head select command (the aforementioned necessary time of head selection). By doing this, almost the whole of the necessary time of head selection is shifted into the recording and reproducing time by the head before changing, so that the changing time before the start of recording and reproducing by the next head can be shortened furthermore and the overhead time accompanying changing can be reduced.

According to the present invention, when disk recording media for storing position information between data along concentric circular tracks and a plurality of heads which are connected to each other and move to each track at the same cylinder position of each disk recording medium are used and one of the heads is selected, the feedback control for following the selected previous head at the center of the target track is executed on the basis of the reproduced position information. By doing this, after the offset between the heads accompanying head changing is compensated, the recording and reproducing can be continued.

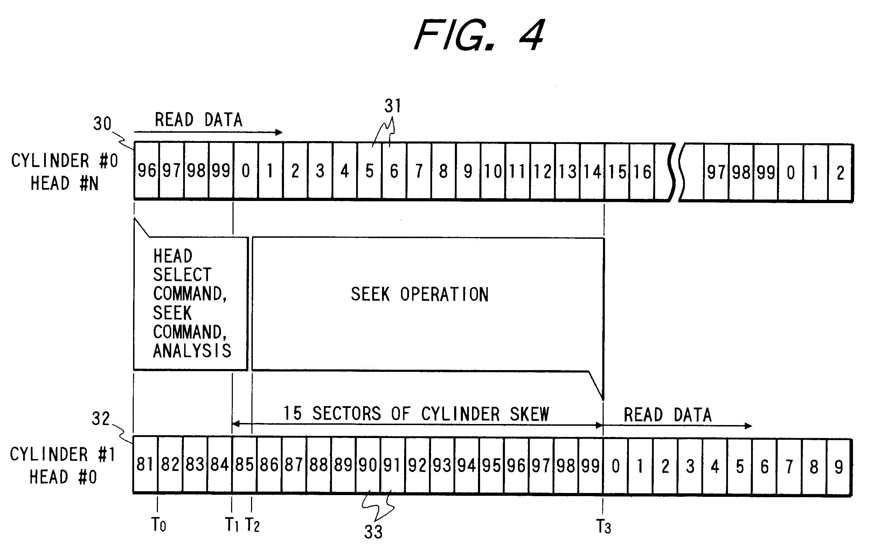

Furthermore, an embodiment when data blocks constituting a comparatively large data file are continuously processed will be described hereunder. In Fig. 4, a numeral 30 indicates data recorded on the track of Head #N of Cylinder #0, which includes 100 sectors 31 from #0 to #99. A numeral 32 indicates data recorded on the track of Head #0 of Cylinder #1, which includes 100 sectors 33 from #0 to #99 in the same way as with the data 30. The position of Section #0 of the data 32 is shifted from the position of Sector #0 to which Head #N of Cylinder #0 corresponds. This shift amount is a cylinder skew amount. This cylinder skew amount is decided so that reading from Sector #0 of Head #0 of Cylinder #1 can be in time in consideration of the expected maximum offset operation time (seek operation time).

Processing that the head of Cylinder #N is changed sequentially from Head #0 to the last (#N) head, and the head group (for one track) is sought in Cylinder #1 next, and the head is changed sequentially from Head #0 to Head #N in the same way is executed sequentially. Also in this seek operation from Cylinder #0 to Cylinder #1, when a seek command is issued before the processing for the last sector of the head of the maximum (last) head number ends, it is possible to shorten the overhead time required for seeking, to make the cylinder skew value smaller, and to improve the data processing speed. In this case, needless to say, a head select command (select command) from Head #N to Head #0 is also issued. The seek operation requires a time which is almost 2 times of the operation time relating to head changing. Since the seek command and the head select command are processed, the command processing time requires about 1.2 times of the processing time of an ordinary head select command.

Therefore, according to this embodiment, also when a head is sought (moved) from a certain cylinder position to the next cylinder position, it is possible to shift the time required for the seek controller to receive a seek command from the data controller, decodes it, and starts the head seek operation actually into the recording and reproducing time by the head before seeking and also to shorten the time required for head changing including the seek operation.

When the start point (position of Sector #0) of each track at the same cylinder position of the successive disk recording media is shifted backward sequentially in the rotational direction of the disk recording media in the order corresponding to the head changing order almost in correspondence with the necessary time of head changing, the rotation waiting time at the time of head changing can be eliminated almost fully. In this case, only the necessary time of compensation for the offset may be taken into account as a time from the point of time that the recording and reproducing by the head before changing ends to the point of time that the recording and reproducing by the head after changing (the time for changing all the heads). As a result, the shifting amount of track start point between the successive disk recording media can be reduced.

## Claims

1. A magnetic disk drive for executing reading or writing of data by a head (1) which moves on the surface of a disk recording medium (2), comprising:

   at least one disk recording medium (2) which is held so as to rotate and has data recording areas on the surface thereof;

   a plurality of heads (1) for recording or reproducing data in each data recording area of said disk recording medium;

   a controller (4-7, 9-13) for controlling recording and reproducing of data according to a command from a high-order device (8), controlling changing of the head (8) sequentially according to the amount of data which is handled for recording and reproducing data, and furthermore issuing a head select command for instructing the head to be selected next before the end of the processing by the present head; and

   a head selection controller for selecting the head according to the head select command which is sent from said controller.

2. A magnetic disk drive according to claim 1, wherein said head select command is issued earlier than the point of time that the input and output for said certain disk recording medium by the data controller ends at least by the time required for said head selection controller to decode said head select command.

3. A magnetic disk drive according to claim 1, wherein said controller instructs the following controller to follow said selected head on the track in the corresponding data recording area on the basis of the position information which is reproduced by said head when one of the heads is selected by said head selector.

4. A magnetic disk drive according to claim 3, wherein said head is positioned in a new data recording area after it is selected by said head selection controller and the position in said new data recording area which is decided first is farther away from the position of the last end in the data recording area which is decided before selection practically by the distance that said disk recording medium moves while said following controller is following in the new data recording area.

5. A magnetic disk drive for executing reading or writing of data on a disk recording medium by a magnetic head, comprising:
a disk recording medium (2) which is held so as to rotate and has a plurality of recording tracks;
a plurality of heads (1) for recording or reproducing data on each recording track of said disk recording medium;
an actuator (3, 14) for positioning said plurality of heads to recording tracks of said disk recording medium;
a first controller (4-7, 9, 10, 12, 13) for controlling recording and reproducing of data according to a command from the high-order device and issuing a command for positioning said head corresponding to the next recording track which is to be recorded or reproduced successively to said next recording track before the recording or reproducing of data on the preceding recording track ends; and
a second controller (11) for positioning said head to the next recording track by said command.

6. A magnetic disk drive according to claim 5, wherein said first controller issues said command earlier than the point of time that the recording or reproducing of data on the preceding recording track ends by the time practically equal to the time required for said second controller to recognize said command.

7. A magnetic disk drive according to claim 6, wherein said second controller controls changing to the head corresponding to the recording track on the surface of another disk recording medium from the surface of the disk recording medium having the preceding recording track according to said command.

8. A magnetic disk drive according to claim 6, wherein said second controller furthermore controls said actuator so as to move the head to the recording track at a different radius position from the preceding recording track on the disk recording medium according to said command.

9. A magnetic disk drive for executing reading or writing of data on a disk recording medium by a magnetic head, comprising:
a disk recording medium (2) which is held so as to rotate and has a plurality of recording tracks;
a plurality of heads (1) for recording or reproducing data on each recording track of said disk recording medium;
an actuator (3, 14) for positioning said plurality of heads to recording tracks of said disk recording medium;
a first controller (4-7, 9, 10, 12, 13) for controlling recording and reproducing of data according to a command from the highorder device and issuing a command for changing to the head corresponding to the next recording track which is to be recorded or reproduced successively when the data which is requested to be recorded or reproduced from said high-order device exceeds the amount of data which can be recorded or reproduced by said preceding recording track; and
a second controller (11) for controlling positioning of the head corresponding to said next recording track to said next recording track by said command.

10. A magnetic disk drive according to claim 9, wherein said first controller issues said command earlier than the point of time that the recording or reproducing of data on said preceding recording track ends at least by the time required for said second controller to recognize said command.

11. A magnetic disk drive according to claim 9, wherein said disk recording medium is installed so that each start point of said recording tracks is shifted from the start point of said recording track practically by the distance that it rotates during the head changing time.

## FIG. 1

FIG. 2

FIG. 3   PRIOR ART

EP 0 673 033 A2

# FIG. 4

30 — CYLINDER #0 HEAD #N

READ DATA →

31

| 96 | 97 | 98 | 99 | 0 | 1 | 2 | 3 | 4 | 5 | 6 | 7 | 8 | 9 | 10 | 11 | 12 | 13 | 14 | 15 | 16 | ⌇ | 97 | 98 | 99 | 0 | 1 | 2 |

HEAD SELECT COMMAND, SEEK COMMAND, ANALYSIS

SEEK OPERATION

32 — CYLINDER #1 HEAD #0

← 15 SECTORS OF CYLINDER SKEW →  READ DATA →

| 81 | 82 | 83 | 84 | 85 | 86 | 87 | 88 | 89 | 90 | 91 | 92 | 93 | 94 | 95 | 96 | 97 | 98 | 99 | 0 | 1 | 2 | 3 | 4 | 5 | 6 | 7 | 8 | 9 |

$T_0$  $T_1$ $T_2$  33  $T_3$

EP 0 673 033 A2